**Europäisches Patentamt**

**European Patent Office**

**Office européen des brevets**

(19)

(11) Publication number : **0 054 324**
**B1**

(12) # EUROPEAN PATENT SPECIFICATION

(45) Date of publication of patent specification :
21.03.84

(21) Application number : 81201311.8

(22) Date of filing : 26.11.81

(51) Int. Cl.³ : **B 21 B 39/22, B 65 G 7/08**

(54) **Apparatus for turning elongate objects of polygonal cross section about an edge thereof.**

(30) Priority : 12.12.80 NL 8006750

(43) Date of publication of application :
23.06.82 Bulletin 82/25

(45) Publication of the grant of the patent :
21.03.84 Bulletin 84/12

(84) Designated contracting states :
**BE DE FR GB IT LU**

(56) References cited :
**CH-A- 401 874**
**DE-C- 155 723**
**DE-C- 857 939**

(73) Proprietor : **HOOGOVENS GROEP B.V.**
**P.O. Box 10.000**
**NL-1970 CA IJmuiden (NL)**

(72) Inventor : **Middel, Jan**
**Nieuwe Sluis 17**
**Barsingerhorn (NL)**
Inventor : **Korver, Johannes Cornelis**
**Kortewelde 79**
**Zuid -Scharwoude (NL)**

(74) Representative : **Wentzel, Hendrik Cornelis et al**
**Hoogovens Groep B.V. P.O. Box 10.000**
**NL-1970 CA IJmuiden (NL)**

## Apparatus for turning elongate objects of polygonal cross section about an edge thereof

The present invention relates to an apparatus for turning elongate objects of polygonal transverse section about their longitudinal edges, when the objects are resting transversely on a plurality of spaced-apart supports. Although the invention is described below mainly in relation to its principal application, which is the turning of steel blooms lying on a rack, its application is not limited to this and it can be applied to other objects of the appropriate shape, e. g. objects of non-ferrous metal or concrete, or even packages such as cases or bales.

After rolling, steel blooms of polygonal transverse section (square, rectangular, hexagonal, etc.) are placed on a rack, where they have to be turned around their longitudinal axes for the purpose of surface inspection and, if necessary, the removal of flaws by flame treatment. In present practice, the blooms are turned manually with the aid of a turning bar, which is applied to one end of the bloom. Heavier blooms are turned by two men working with a turning bar at each end of the bloom. One disadvantage of this practice is that the personnel responsible for the work are subjected to a one-sided physical strain which can result in back injuries.

DE-C-857,939 (1951) illustrates apparatus for turning rolled steel product at a different stage of its production, when the steel has to be turned about one edge while lying on a number of parallel rollers, prior to being re-rolled. The apparatus has a carriage which runs beneath the roller and carries a stop which extends above several rollers and turning elements which move up between the rollers to turn the object on the rollers. This apparatus is for turning only one object at a time, the object being moved off the rollers and replaced by another before another turning operation can take place.

The present invention aims to provide apparatus which can be used to turn successively a plurality of objects which are lying mutually parallel on the supports, as is required for steel blooms on an inspection rack. Preferably the apparatus can operate even if the objects are touching one another.

The invention is set out in the claims. To enable successive turning of adjacent objects, the stop is movable up and down, relative to the support surface, and when in its upper position is depressible by the object being turned. The turning member thus turns the object, which initially may abut the stop over onto the stop. The carriage can then move forward to the next object to be turned.

The apparatus can operate even if the objects are initially touching each other, which is an advantage over the manual turning method in which there must be a gap to allow access of the turning bar.

A preferred embodiment of the invention will now be described by way of example with reference to the accompanying drawings in which :

Figure 1 is a diagrammatic plan view of apparatus embodying the invention and the situation in which it operates.

Figure 2 is a diagrammatic cross sectional view on the line II-II of Figure 1.

Figure 3 is a more detailed plan view of the apparatus embodying the invention outlined in Figure 1.

Figure 4 is a cross sectional view on the line IV-IV of Figure 3.

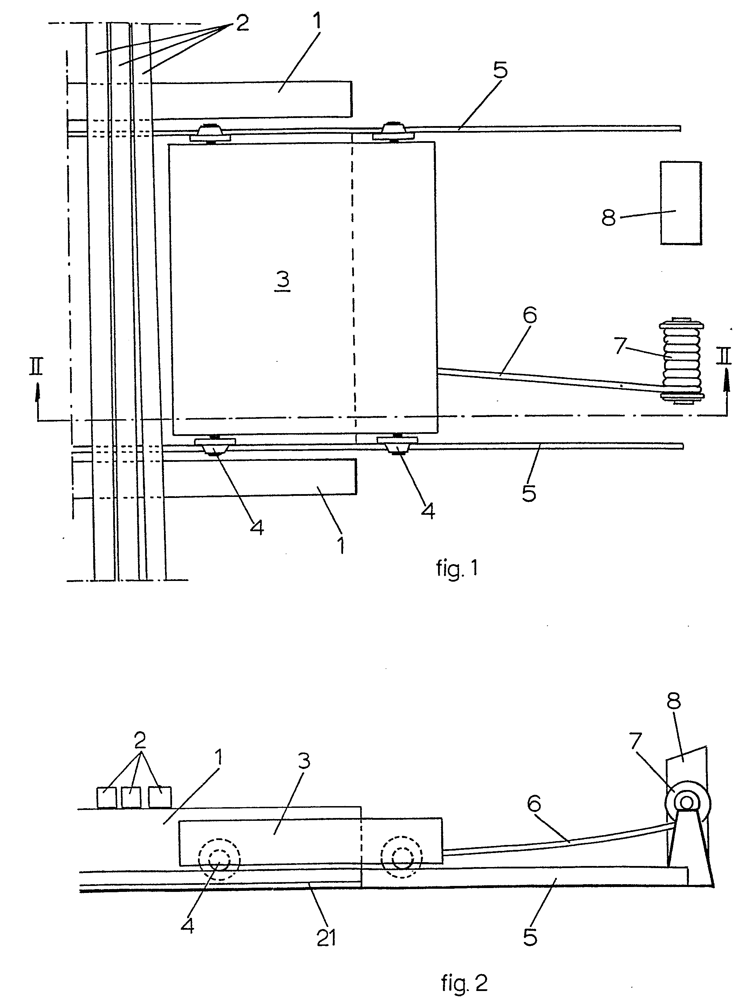

In Figure 1, there are shown a pair of supports 1 forming part of an inspection rack for blooms 2 in the finishing shop of a blooming mill. The supports 1 have parallel horizontal upper surfaces 27 on which the blooms 2 lie transversely. In the steel industry, the term « bloom » is used to signify elongate semi-finished products of polygonal (mostly square, but also rectangular or hexagonal) cross section. In the case of a rectangular cross section, the width is not very much greater than the height. The semi-finished products are, for example 6 to 12 m long with a typical cross section dimension of 100 to 400 mm.

The surface of each bloom is inspected when it is lying on the rack and is corrected if necessary by means of flame scarfing. In order to be able to treat the whole surface of the billet, the billet must be turned about its longitudinal axis, i. e. about its longitudinal edges.

The turning apparatus of the present invention shown in Figures 1 to 4, comprises a carriage 3 which can be moved beneath the blooms 2 between the two supports 1. The carriage 3 can be controlled and powered in any suitable manner. In the illustrated embodiment, it has wheels 4 and runs along rails 5. It is powered pneumatically, being connected to a compressed air source, e. g. a compressed air mains in the steel works by a compressed air hose 6, of which the part which is not in use is coiled on a reel 7. The apparatus is operated, in this example, from an adjacent control desk 8.

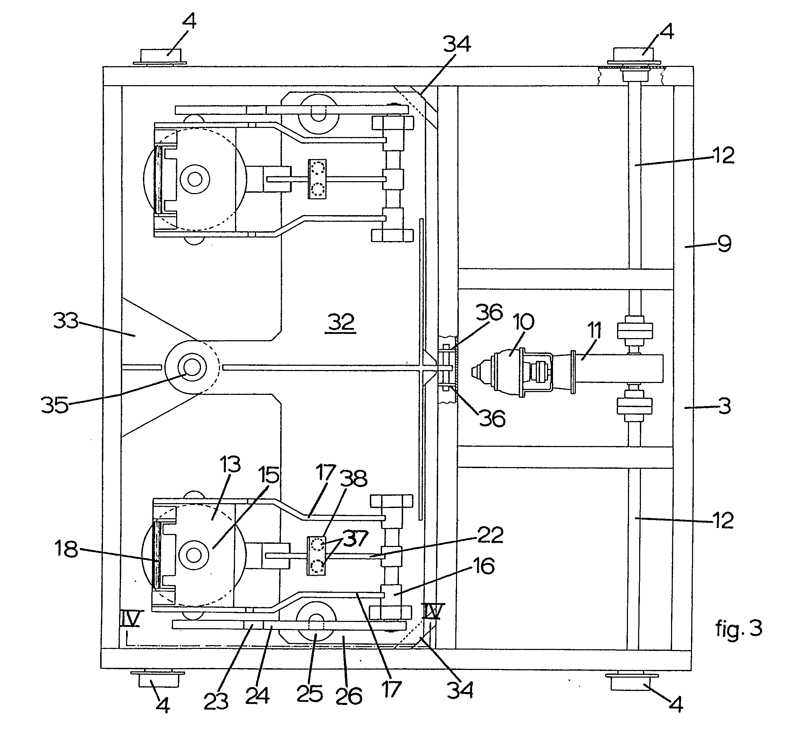

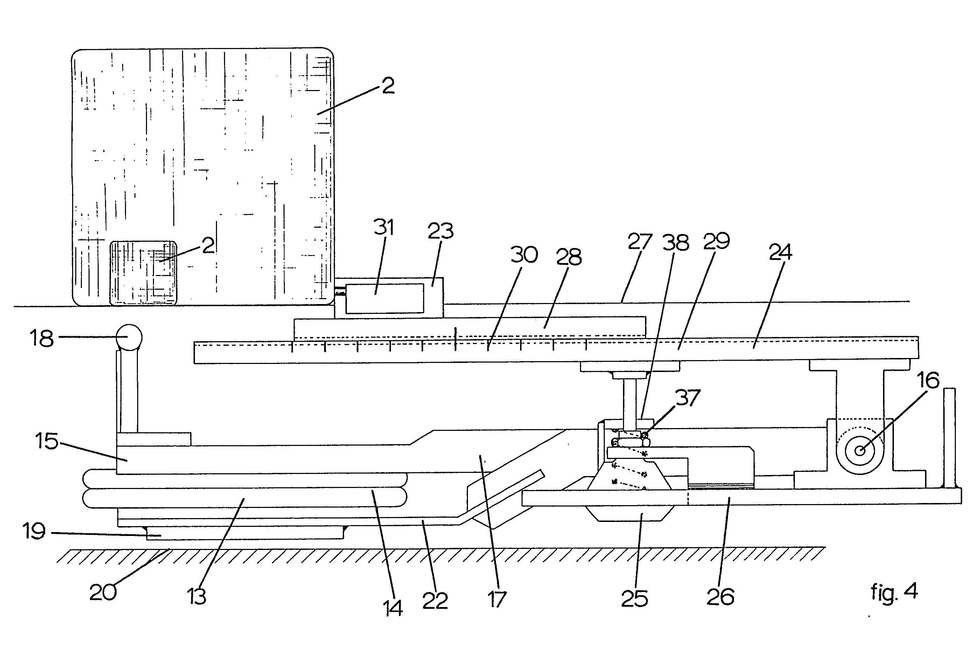

Figure 3 shows that the carriage 3 has a frame 9 to which the wheels 4 are attached. One pair of wheels 4 is driven by a pneumatic motor 10 via axles 12 and a gearbox 11. The carriage 3 has two devices 13, mounted on a subframe 32 described below, for applying a turning force to the underside of a bloom to be turned (see also Figure 4). These devices 13 may take many suitable forms, but in the preferred embodiment illustrated each comprises a vertically acting pneumatic bellows 14 having a top 15 which is rotatable about a shaft 16 fixed to the subframe 32 and connected to this shaft 16 by arms 17. The top plate 15 carries a turning beam 18 which, upon expansion of the bellows, rises to the level of the surfaces 27 of the supports 1 to engage the bloom 2 to be turned and then rise further to effect the turning operation.

Whilst a turning force is being applied to the underside of a bloom, the bottom plate 19 of the bellows 14 rests on ·a floor 20 underneath the carriage 3 between the supports. In this way, the carriage 3 does not have to be made strong enough to support the turning force. If this floor surface 20 is unsuitable for supporting the bellows, e. g. if it takes the form of a gravel bed, it may be covered with a steel plate 21 of adequate thickness, as diagrammatically illustrated in Fig. 2. The lower plate 19 of the bellows is carried by an arm 22 which is rotatably mounted on shaft 16.

A spring 37 supports the arm 22 on a fixed part 26 of the sub-frame. The spring 37 engages a bracket 38 on the arm 22. The lower plate 19 of the bellows is thus kept free from the floor 20, when the bellows is not under load. To position the carriage 3 in relation to a bloom, the sub-frame 32 carries two stops 23, mounted on arms 24 adjacent the respective devices 13 and rotatably mounted on the respective shafts 16. Each stop 23 is raisable and lowerable relative to the fixed part 26 of the sub-frame 32 to and from a position above the top surface 27 of the supports 1 by a pneumatic lifting cylinder 25. In its fully raised position the stop 23 can be pushed down to beneath the top surface 27 of the supports, since the pneumatic cylinder 25 acts as a weak spring.

With the stop 23 in the lowered position, the carriage 3 can be moved freely beneath the blooms 2 resting on the supports 1. With the stop 23 in the raised position, the carriage contacts a bloom 2, which prevents further movement of the carriage. The bloom 2 is then turned over on top of the stop 23, which is depressed by the bloom, by raising the turning beams 18. The distance between the turning beam 18 and the stop 23 is chosen to be larger than one half of the width of the objects resting on the supports, but smaller than this width. In this way the objects are turned about their edges nearest to the stop 23 when the beam 18 is raised.

When depressed by the bloom turned over on top of it, the stop 23 remains in frictional engagement with the underside of the bloom, but the carriage can now be moved forward to the next bloom. When the stop 23 is clear of the turned bloom, it rises again to its top position.

Figure 4 shows that the horizontal spacing of the stop 23 from the turning beam 18 can be adjusted, for turning blooms of different cross section. This adjustment of the stop 23 is possible because the arm 24 takes the form of a pair of mating racks 28 and 29, the stop being linked to the upper rack 28. If the apparatus is set for blooms of a certain cross section with a certain position of the stop 23, it can be adapted for turning blooms of a different cross section by moving the upper rack 28 with stop 23 to a different position. To facilitate adjustment a scale 30 can be fitted to the side of the racks ; this scale indicates the position of the racks for the different bloom sizes.

The carriage is also provided with a sensor to detect contact of the stop with blooms in the form of a switch 31 attached to the stop. The switch 31 has an actuator which makes direct contact with the bloom. The signal produced by the switch is fed to a control system which effects automatic successive turning of the blooms. Whenever the stop 23 makes contact with a bloom 2, the switch 31 is actuated. At this signal, the motor 10 of the carriage is stopped and the turning beams raised. The switch 31 is released as the billet 2 is turned, and after a suitable time interval, the bellows 14 is deflated and the carriage 3 moves again. In this way, several billets can be turned automatically in succession.

When the last bloom has been turned, the stop 23 can be positively lowered by depressurizing the cylinder 25, to below the surface level of the supports 1. The carriage can then be moved freely back beneath the blooms to its starting position. The blooms can then be turned again, if desired.

Figure 3 shows the subframe 32 which rests on supports 33 and 34 of the frame 9 of the carriage and is rotatable about a vertical shaft 35. The degree of rotation permitted is slight and is limited by the abutments 36. Since the subframe 32 is provided with the two stops 23, when the carriage encounters a bloom which is not exactly at right angles to the supports 1, the subframe 32 can align itself by turning relative to the carriage. The advantage of this is that the turning force is then exerted at the correct points on the bloom.

## Claims

1. Apparatus for turning an elongate object (2) having a polygonal transverse section about a longitudinal edge of the object (2), the object (2) resting transversely on upper surfaces of at least two spaced apart supports (1), comprising a carriage (3) which is movable beneath the level of said upper surfaces of the supports (1) and carries at least one stop (23) projecting above the said level and at least one turning member (18) movable upwardly from below said level so as to engage and turn the object (2) when the object (2) is contacted by the stop (23), characterized in that, in order that the apparatus can successively turn a plurality of said objects (2) which are lying side-by-side on said supports (1), the stop (23) is movable from a first position below said level to a second position above said level and stop moving means (25) are provided for moving the stop (23) between said first and second positions, the stop (23) furthermore being depressible when in said second position so that the object (2) being turned can be turned over by the turning member (18) so as to lie above the stop (23).

2. Apparatus according to claim 1 wherein means for raising said turning member (18) in order to turn the object comprises a vertically acting pneumatic bellows (13).

3. Apparatus according to claim 2 wherein, while the turning member (18) applies force to the object (2) to turn it, the said bellows (13) is supported on a floor (20) located beneath said carriage (3).

4. Apparatus according to any one of claims 1 to 3 wherein the horizontal spacing between the stop (23) and the turning member (18) is adjustable to permit turning of objects (2) of different sizes.

5. Apparatus according to claim 4 wherein the stop (23) is supported by means of a rack (29) extending horizontally toward the turning member (18) and a rack-engaging member (28) which is adapted to engage the rack (29) at a plurality of predetermined positions, thereby to locate the stop at a selected predetermined spacing from the turning member (18).

6. Apparatus according to any one of the preceding claims including control means for control of the apparatus, which control means includes a sensor (31) arranged to detect the presence of a said object (2) adjacent the stop (23) by direct contact with the object (2).

7. Apparatus according to claim 6 wherein said sensor (31) is a switch mounted on the stop (23).

8. Apparatus according to any one of the preceding claims wherein said stop (23) and said turning member (18) are mounted on a subframe (32) which is mounted on said carriage (3) so as to be movable about a vertical axis (35), thereby to accommodate the position of the turning member (18) to a plurality of said objects (2) which are not exactly mutually parallel.

9. Apparatus according to any one of the preceding claims wherein said stop (23) is resiliently depressible when in said second position.

## Ansprüche

1. Vorrichtung zum Drehen eines länglichen Gegenstands (2) mit polygonalem Querschnitt um eine Längskante, wobei der Gegenstand auf den oberen Flächen von mindestens zwei im Abstand zueinander angeordneten Trägern (1) liegt, mit einem Wagen (3), der unterhalb des Niveaus der oberen Flächen der Träger (1) bewegbar ist und mindestens einen Anschlag (23) aufweist, der über das genannte Niveau hinausragt und mit mindestens einer Dreheinrichtung (18), die von unterhalb des Niveaus nach oben bewegbar ist, um den Gegenstand zu erfassen und zu drehen, sobald der Gegenstand vom Anschlag berührt wird, dadurch gekennzeichnet, daß um der Vorrichtung das Drehen einer Vielzahl von auf den Trägern nebeneinander liegenden Gegenständen nacheinander zu ermöglichen, der Anschlag (23) von einer ersten Position unterhalb des Niveaus zu einer zweiten Position oberhalb des Niveaus bewegbar ist und Anschlags-Bewegungselemente (25) zum Bewegende Anschlags zwischen der ersten und der zweiten Position vorgesehen sind, wobei der Anschlag (23) außerdem in der zweiten Position niederdrückbar ist, so daß der zu drehende Gegenstand durch die Dreheinrichtung (18) umgedreht werden kann und dann über dem Anschlag liegt.

2. Vorrichtung gemäß Anspruch 1, dadurch gekennzeichnet, daß die Hebevorrichtung für die Dreheinrichtung (18) zum Drehen des Gegenstands einen vertikal arbeitenden Luftbalg (13) aufweist.

3. Vorrichtung gemäß Anspruch 2, dadurch gekennzeichnet, daß zum Drehen des Gegenstands die Dreheinrichtung (18) Kraft auf diesen ausübt und der Luftbalg (13) auf einem Fundament (20) unterhalb des Wagens (3) gelagert ist.

4. Vorrichtung gemäß einem der Ansprüche 1 bis 3, dadurch gekennzeichnet, daß der horizontale Abstand zwischen dem Anschlag (23) und der Dreheinrichtung (18) einstellbar ist, um das Drehen von Gegenständen unterschiedlicher Abmessungen zu ermöglichen.

5. Vorrichtung gemäß Anspruch 4, dadurch gekennzeichnet, daß der Anschlag (23) von einer Zahnstange (29) getragen wird, die sich horizontal zur Dreheinrichtung (18) hin erstreckt, und daß ein Teil (28) zum Eingreifen in die Zahnstange (29) an einer Vielzahl von vorgegebenen Stellen vorgesehen ist, wodurch der Anschlag in einen ausgewählten vorbestimmten Abstand zu der Dreheinrichtung gebracht wird.

6. Vorrichtung gemäß einem der Ansprüche 1 bis 5, dadurch gekennzeichnet, daß sie ein Steuergerät zu ihrer Steuerung aufweist, welches einen Fühler (31) zum Ermitteln eines am Anschlag (23) anliegenden Gegenstands durch unmittelbaren Kontakt aufweist.

7. Vorrichtung gemäß Anspruch 6, dadurch gekennzeichnet, daß der Fühler (31) ein auf dem Anschlag angebrachter Schalter ist.

8. Vorrichtung gemäß einem der Ansprüche 1 bis 7, dadurch gekennzeichnet, daß der Anschlag (23) und die Dreheinrichtung (18) auf einem Unterrahmen (32) angebracht sind, der um eine vertikale Achse drehbar auf dem Wagen (3) befestigt ist, wodurch die Position der Dreheinrichtung (18) an eine Vielzahl der Gegenstände angepaßt wird, die nicht genau parallel zueinander sind.

9. Vorrichtung gemäß einem der Ansprüche 1 bis 8, dadurch gekennzeichnet, daß der Anschlag (23) in der zweiten Position elastisch niederdrückbar ist.

## Revendications

1. Appareil pour retourner un objet allongé (2) de section transversale polygonale sur une arête longitudinale dudit objet (2), l'objet (2) reposant transversalement sur les surfaces supérieures d'au moins deux supports espacés (1), comprenant un chariot (3) pouvant se déplacer au-dessous du niveau des surfaces supérieures des supports (1) et muni d'au moins une butée (23) faisant saillie au-dessus dudit niveau et d'au moins un organe de rotation (18) pouvant être déplacé vers le haut à partir du dessous de ce niveau afin d'engager et de retourner l'objet (2) lorsque la butée (23) entre en contact avec celui-ci, caractérisé en ce que pour permettre le retournement successif par l'appareil d'une pluralité d'objets (2) disposés côte-à-côte sur les supports (1), la butée (23) peut être déplacée à partir d'une première position située au-dessous dudit niveau, jusqu'à une seconde position au-dessus de ce niveau et des moyens (25) de déplacement de butée sont prévus pour déplacer la butée (23) entre la première et la seconde position, la butée (23) pouvant être en outre abaissée quand elle est dans la seconde position afin que l'objet (2) puisse être retourné par l'organe de rotation (18) de manière à venir au-dessus de la butée (23).

2. Appareil selon la revendication 1, dans lequel un moyen d'élévation d'organe de rotation (18), afin de retourner l'objet, comprend un soufflet pneumatique (13) à action verticale.

3. Appareil selon la revendication 2, dans lequel pendant que l'organe de rotation (18) applique une force sur l'objet (2) afin de le faire tourner, le soufflet repose sur un plancher (20) situé au-dessous dudit chariot (3).

4. Appareil selon l'une des revendications 1 à 3, dans lequel l'espacement horizontal entre la butée (23) et l'organe de rotation (18) est réglable pour permettre le retournement d'objets (2) de différentes tailles.

5. Appareil selon la revendication 4, dans lequel la butée (23) est maintenue par un support (29) s'étendant horizontalement vers l'organe de rotation (18) et par un organe (28) d'engagement de support adapté pour s'engager sur le support (29) en plusieurs positions prédéterminées, ce qui permet ainsi de positionner la butée à un intervalle prédéterminé choisi de l'organe de rotation (18).

6. Appareil selon l'une quelconque des revendications précédentes, comprenant un moyen de commande pour la commande de l'appareil, ce moyen comportant un détecteur (31) conçu pour détecter la présence dudit objet (2) près de la butée (23) par contact direct avec l'objet (2).

7. Appareil selon la revendication 6, dans lequel le détecteur (31) est un interrupteur monté sur la butée (23).

8. Appareil selon l'une quelconque des revendications précédentes, dans lequel la butée (23) et l'organe de rotation (18) sont montés sur un châssis secondaire (32) monté sur le chariot (3) afin de pouvoir être déplacé autour d'un axe vertical (35) afin d'adapter ainsi la position de l'organe de rotation (18) à une pluralité d'objets (2) qui ne sont pas exactement parallèles entre eux.

9. Appareil selon l'une quelconque des revendications précédentes, dans lequel la butée (23) peut être comprimée élastiquement lorsqu'elle se trouve dans cette seconde position.

fig. 1

fig. 2

fig. 3

0 054 324

fig. 4

0 054 324